# EUROPÄISCHE PATENTSCHRIFT

(11) **EP 0 997 643 B1**
(45) Veröffentlichungstag und Bekanntmachung des Hinweises auf die Patenterteilung: **12.07.2006**
(21) Anmeldenummer: 98120299.7
(22) Anmeldetag: 27.10.1998
(51) Int. Cl.: F04B 53/06, F04B 43/02, F04B 13/00

(54) **Membrandosierpumpe**
Diaphragm metering pump
Pompe doseuse à membrane

(43) Veröffentlichungstag der Anmeldung: 03.05.2000
(73) Patentinhaber: ALLDOS Eichler GmbH, 76327 Pfinztal (DE)
(72) Erfinder: Fleischer, Horst, 76229 Karlsruhe (DE); Müller, Klaus, 76185 Karlsruhe (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 2 651 614
- DE-A- 4 219 664
- US-A- 4 309 153
- US-A- 4 523 903
- PATENT ABSTRACTS OF JAPAN vol. 004, no. 096 (M-020), 11. Juli 1980 & JP 55 054683 A (MITSUWA SEIKI CO LTD), 22. April 1980

## Beschreibung

Die Erfindung betrifft eine Membrandosierpumpe mit einem Dosierraum, der einen Zulauf und einen druckseitigen Ablauf sowie eine von einem Hubantrieb betätigte Dosiermembran aufweist, und mit einem stromauf des Dosierraums angeordneten Förderraum, der einen Sauganschluß für das zu dosierende Medium und einen Druckanschluß sowie eine von einem Hubantrieb betätigte Fördermembran aufweist.

Derartige Dosierpumpen werden vor allem dort eingesetzt, wo ein flüssiges Medium in kleinen oder mittleren Mengen reproduzierbar gefördert und dosiert abgegeben werden muß, beispielsweise in der chemischen oder pharmazeutischen Industrie sowie in der Wasseraufbereitung oder auch in Reinigungsanlagen unterschiedlicher Art.

Von diesen Membrandosierpumpen wird in vielen Einsatzfällen eine hohe Dosiergenauigkeit auch bei kleinsten Dosiermengen gefordert, die aber nur schwer realisierbar ist. Dies gilt in besonderem Maße für Flüssigkeiten, die einen hohen Dampfdruck aufweisen und/oder gelöste Gase enthalten. Aufgrund des Saugdrucks kommt es bei der Förderung zur Dampfbildung oder zum Entgasen. Durch die in den Dosierraum gelangenden Gase wird der Füllungsgrad reduziert, so daß die Dosiergenauigkeit erheblich verfälscht wird.

Ein weiteres Problem liegt in der Kontrolle der Dosierung, da insbesondere bei kleinen oder sehr kleinen Dosiermengen herkömmliche Durchflußmeßgeräte, z.B. Flügelradzähler od. dgl., wegen der durch den Membranhub verursachten instationären Strömung zu ungenau arbeiten und die von ihnen gelieferten Meßsignale nicht zum Nachregeln der Pumpe geeignet sind.

Aus der US 2 826 067 ist eine Kontrolleinrichtung für eine aus einem Vorratsbehälter fördernde Pumpe bekannt. Dabei ist ein zusätzlicher Meßzylinder mit dem Behälter verbunden, der Meßeinrichtungen zur Bestimmung des pro Zeiteinheit geförderten Volumens aufweist. Durch Abgleich mit einem Sollwert kann die Pumprate im Betrieb kontrolliert werden. Aufgrund der hydraulischen Verbindung zwischen dem Behälter und dem beispielsweise als Standglas ausgebildeten Meßzylinder sowie zur Vermeidung eines zu hohen Saugdrucks muß der Vorratsbehälter oberhalb der Pumpe angeordnet sein, wodurch der Anwendungsbereich dieser Ausführungsform stark eingeengt ist.

Eine ähnliche Anordnung ist der US 4 897 797 zu entnehmen, wobei die Kontrolle der Förderrate dadurch geschieht, daß eine in einem Eichversuch ermittelten Hubzahl der Pumpe, bei der der Flüssigkeitspegel in dem Meßzylinder um ein durch zwei Sensoren festgelegtes Niveau abgesenkt wird, mit der für diese Absenkung tatsächlich notwendigen Hubzahl verglichen wird. Auch bei der US 4 897 797 bestehen die vorgenannten konstruktiven und fördertechnischen Nachteile aufgrund der von der Saughöhe abhängigen Befüllung der Pumpe.

Aus der DE 42 19 664 A1, von der im Oberbegriff des Anspruchs 1 ausgegangen wird, ist eine Membrandosierpumpe bekannt, der eine ebenfalls als Membranpumpe ausgebildete Hilfspumpe zugeordnet ist, mit der der eigentliche Arbeits- oder Dosierraum der Membrandosierpumpe unabhängig von der Saughöhe unter Druck befüllt wird. Die Fördermembran dieser Hilfspumpe ist mit dem die Dosiermembran betätigenden Hubstößel verbunden. Ein selbstentlüftendes Ventil ist zum Abführen der bei der Förderung gebildeten Gasvolumina in dem Dosierraum der Membrandosierpumpe vorgesehen.

Bei dieser konstruktiv aufwendigen Vorrichtung wird zwar eine von der Saughöhe unabhängige Befüllung und Entlüftung des Dosierraums erreicht, doch ist zum einen die Durchflußmessung zur exakten Kontrolle der Dosierung durch die instationäre Strömung problematisch und kommt es zum anderen durch das Entlüftungsventil zu Flüssigkeitsverlusten, was vor allem bei sehr kleinen Dosiermengen zu relevanten Fehlern führt.

Der Erfindung liegt die Aufgabe zugrunde, eine Membrandosierpumpe vorzuschlagen, bei der das Problem einer ungenauen Dosierung auf konstruktiv einfache Weise gelöst ist.

Die Aufgabe wird bei einer Membrandosierpumpe der eingangs beschriebenen Art erfindungsgemäß dadurch gelöst, daß der Förderraum über seinen Druckanschluß an einen Vorlagebehälter angeschlossen ist, der ablaufseitig mit dem Zulauf des Dosierraums verbunden ist.

Die Erfindung beruht auf der Idee, die Dosierflüssigkeit nicht direkt aus dem sie enthaltenden Vorratsbehälter anzusaugen und zu dosieren, sondern zunächst in einen Vorlagebehälter zu fördern und erst aus diesem in den Dosierraum einlaufen zu lassen. Dabei wird der Vorlagebehälter über den Förderraum befüllt, in dem die ein Pumporgan bildende Fördermembran wirkt.

In dem Vorlagebehälter können auch langsame Trennvorgänge zwischen flüssigen und gasförmigen Bestandteilen der Dosierflüssigkeit vollständig ablaufen. Als Folge davon läuft dem Dosierraum eine blasenfreie Flüssigkeit zu, die sich exakt dosieren läßt.

Wenn der Vorlagebehälter eine ausreichende Füllmenge aufweist, ist es weiter möglich, den Vorratsbehälter der Dosierflüssigkeit von der Membrandosierpumpe abzunehmen, beispielsweise um einen entleerten gegen einen gefüllten Vorratsbehälter auszutauschen, ohne daß der Dosiervorgang unterbrochen werden muß.

Gemäß einer bevorzugten Ausführung ist der Vorlagebehälter oberhalb des Dosierraums angeordnet. Die Dosierflüssigkeit kann hierbei dem Dosierraum unter Schwerkraft zufließen, wodurch Entgasungsvorgänge im Dosierraum, die auf einem durch eine bestimmte Saughöhe notwendigen Saugdruck beruhen, zuverlässig vermieden sind.

In weiter vorteilhafter Ausführung weist der Vorlagebehälter zwei Teilbereiche nach dem Prinzip kommunizierender Röhren auf, die an jeweils beiden Enden hydraulisch verbunden sind, über eine gemeinsame Ablaufleitung an den Zulauf des Dosierraums angeschlossen sind und von denen ein Teilbereich als Meßrohr zur Durchflußmessung ausgebildet ist. Dabei ist in der gemeinsamen Ablaufleitung ein Absperrventil vorgesehen, das in der Schließstellung nur den Weg von dem als Meßrohr ausgebildeten Teilbereich zu dem Zulauf des Dosierraums freigibt. In der Schließstellung des Absperrventils kann eine Durchflußmessung in dem Meßrohr vorgenommen werden. Da durch die Anordnung des Vorlagebehälters eine Entgasung in dem Dosierraum weitestgehend vermieden ist, entspricht die mittels des Meßrohrs bestimmte Durchflußmenge exakt der von der Membrandosierpumpe über den Ablauf des Dosierraums tatsächlich dosierten Flüssigkeitsmenge.

Mit Vorteil wird das Abperrventil automatisiert angesteuert, um während des Dosierbetriebs in einstellbaren, regelmäßigen Zeitabständen eine Durchflußmessung zur Kontrolle der dosierten Flüssigkeitsmenge vornehmen zu können.

In weiter bevorzugter Ausführung weist der Vorlagebehälter einen gegen die Atmosphäre offenen Überlauf auf, über den auch Gasvolumina, die bei Entgasungsvorgängen z. B. aufgrund der Ansaughöhe zwischen dem Vorlagebehälter und dem Vorrratsbehälter entstehen, abgeführt werden. Über diesen Überlauf wird auch Luft abgeführt, die bei kurzzeitiger Abnahme des Vorratsbehälters von der Dosierpumpe während des Betriebs in den Vorlagebehälter gefördert wird.

In bevorzugter Ausgestaltung der Erfindung ist vorgesehen, daß die Dosiermembran und die Fördermembran an einem gemeinsamen, sie antreibenden Hubstößel angeordnet sind, wodurch der konstruktive Aufwand gering gehalten werden kann. Dies kann insbesondere dadurch erreicht werden, daß die Dosiermembran an ihrer dem Dosierraum abgewandten Rückseite zusätzlich zu der Fördermembran als Pumporgan im Förderraum wirksam ist. Um trotz der gleichgerichteten und gleichartigen Hubbewegung der Dosiermembran und der Fördermembran in dem Förderraum eine Saug- bzw. Druckwirkung zu erzielen, ist das pro Membranhub im Förderraum von der Dosiermembran verdrängte Volumen geringer als das von der Fördermembran verdrängte Volumen, wobei sich das effektive Fördervolumen aus der Volumendifferenz der verdrängten Volumina ergibt.

In bevorzugter Ausführung ist der Förderraum durch einen konzentrisch zum Hubstößel angeordneten Ringspalt gebildet. Durch diese ringspaltförmige Ausbildung verbleibt für die beiden Membrane eine ausreichende Auflagerfläche, und sie besitzen dadurch auch im Dauerbetrieb eine lange Standzeit.

Mit Vorteil ist dabei der Durchmesser des Ringspalts auf der der Fördermembran zugewandten Seite, an der weiter mit Vorteil der Sauganschluß und der Druckanschluß des Förderraums münden, größer als auf der der Dosiermembran zugewandten Seite. Mit dieser Anordnung wird einerseits ein Ansammeln von Gasvolumina im Ringspalt vermieden, andererseits läßt sich in einfacher Weise die oben genannte Volumendifferenz erreichen, die das effektive Fördervolumen des Förderraums bestimmt.

In bevorzugter Ausführung ist ein zusätzlicher druckseitiger Anschluß an dem an die Dosiermembran angrenzenden Bereich des Ringspalts ausgebildet, mit dem ein Ansammeln von Gasvolumina in diesem Bereich des Ringspalts, die zu einer erheblichen Beeinträchtigung der Förderleistung führen würden, verhindert wird. Insbesondere sollte der zusätzliche druckseitige Anschluß in dem, mit einem Rückschlagventil gesicherten Druckanschluß zu dem Vorlagebehälter münden.

Wie bereits erwähnt, ist das bei Bewegung des Hubstößels von der Dosiermembran verdrängte Volumen geringer als das von der Fördermembran verdrängte Volumen. Das sich aus der Volumendifferenz im Förderraum ergebende effektive Fördervolumen sollte dabei größer als das gleichzeitig im Dosierraum verdrängte Dosiervolumen sein, wodurch sichergestellt ist, daß in den Vorlagebehälter eine größere Flüssigkeitsmenge nachgefördert wird, als diesem durch den Dosiervorgang entnommen wird. Dies führt dazu, daß der Vorlagebehälter bei Betrieb der Membrandosierpumpe stets gefüllt ist, wobei eine eventuelle Überfüllung über einen Überlauf des Vorlagebehälters abgeführt werden kann.

Weiter mit Vorteil ist an dem Meßrohr zumindest ein Sensor zur Bestimmung der Füllstandshöhe angeordnet, mit dem der Verlauf der Füllstandshöhe über der Zeit aufgenommen werden kann und mit dem somit eine Bestimmung des aus dem Vorlagebehälter geförderten Volumens möglich ist.

Weiterhin bevorzugt ist mit dem Sensor eine Steuereinrichtung zum automatisierten Ansteuern des Hubantriebs verbunden. Damit wird der Antrieb der Membrandosierpumpe aufgrund der von dem Sensor aufgenommenen Werte gesteuert.

Weiterhin vorteilhaft weist die Steuereinrichtung eine Einheit zur Vorgabe eines das Fördervolumen pro Zeiteinheit festlegenden Sollwertes, eine Einheit zur Bestimmung des Istwertes sowie einen Regler zum Abgleich von Soll und Ist-Wert auf, um die Membrandosierpumpe im Betrieb auf einen Sollwert unter Berücksichtigung des jeweiligen Istwertes regeln zu können.

Weiterhin bevorzugt ist die Einheit zur Bestimmung des Istwertes mit dem zumindest einen Sensor verbunden, um die an dem Meßrohr mit dem zumindest einen Sensor aufgenommene Füllstandshöhe als Basis für das tatsächlich von der Pumpe geförderte Volumen zu nutzen.

In weiter vorteilhafter Ausführung ist der Sensor ein Drucksensor, womit mit einem einzelnen Sensor die Füllstandshöhe bestimmbar ist.

In alternativer Ausführung können an dem Meßrohr auch zumindest zwei Sensoren auf unterschiedlichem Niveau angeordnet werden, wobei die Abtastung des Flüssigkeitsniveaus im Meßrohr beispielsweise durch Ultraschall, Lichtschranken, Laser oder durch kapazitive Sensoren möglich ist.

In vorteilhafter Ausführung ist der Hubantrieb der Membrandosierpumpe ein Schrittmotor, der eine digitalisierte, chargenweise Förderung, eine sogenannte Pulse-Pause-Förderung ermöglicht.

In einer alternativen Ausführungsform betätigt der Hubantrieb die Fördermembran über einen Synchronmotor oder einen Asynchronmotor mit Frequenzumrichtung mit konstantem Hubweg oder mit konstanter Hubfrequenz, wobei das Fördervolumen pro Hub durch den Hubweg definiert ist.

Nachstehend ist die Erfindung anhand eines Ausführungsbeispiels beschrieben. In der Zeichnung zeigen:
- Fig. 1: eine schematische, teilweise geschnittene Ansicht einer Membrandosierpumpe;
- Fig. 2: eine Ansicht des Pumpenkopfs im Querschnitt und
- Fig. 3: eine schematische, teilweise geschnittene Ansicht der Membrandosierpumpe und der Steuereinrichtung.

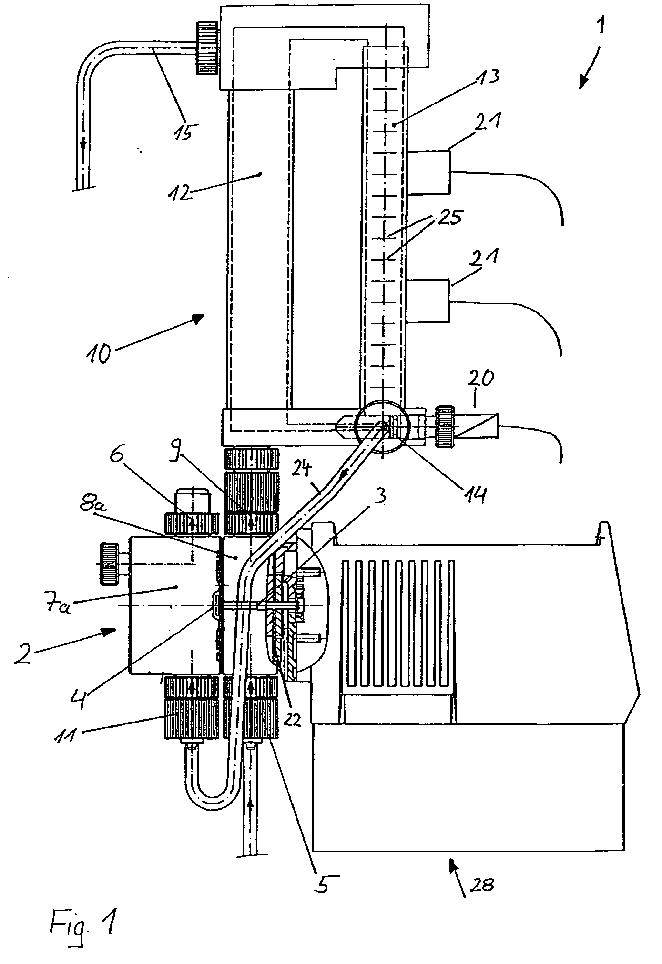

Fig. 1 zeigt eine Membrandosierpumpe 1 mit einem Gehäuse 28 einer nicht näher wiedergegebenen Antriebseinheit, an der ein Pumpenkopf 2 mit einem von der Antriebseinheit angetriebenen Hubstößel 3 angeordnet ist, der zwei auf Abstand parallel angeordnete Membrane, nämlich eine Dosiermembran 4 und eine Fördermembran 22 trägt und betätigt. Der Pumpenkopf 2 steht über einen Sauganschluß 5 mit einem nicht dargestellten, die Dosierflüssigkeit enthaltenden Vorratsbehälter in Verbindung. Über einen druckseitigen Ablauf 6 des Pumpenkopfs 2 wird die Flüssigkeit dosiert abgegeben.

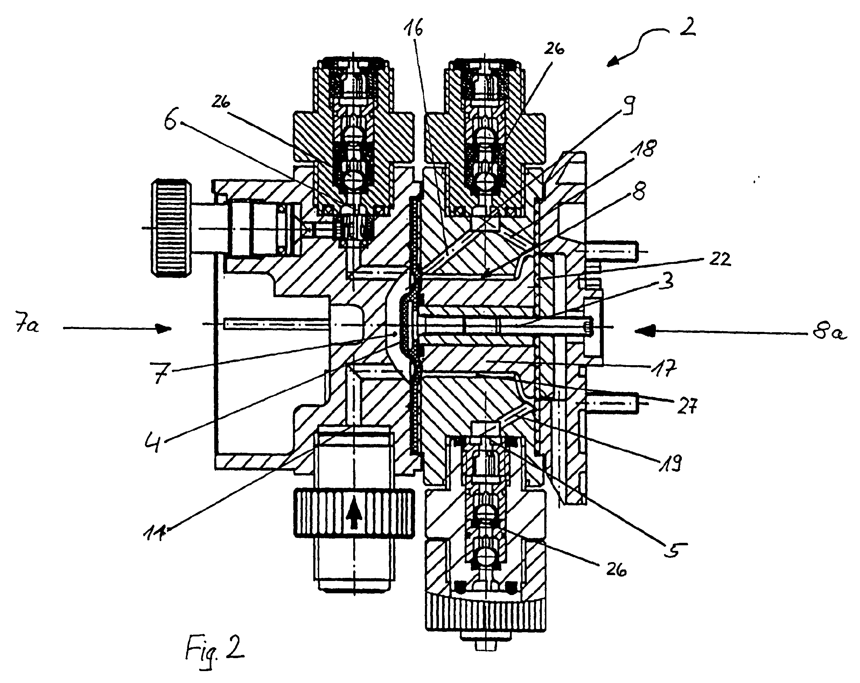

Der Pumpenkopf 2 weist zwei getrennte Bereiche 7a und 8a auf, in denen ein Dosierraum 7 bzw. ein Förderraum 8 (Fig. 2) ausgebildet sind. Zwischen dem Dosierraum 7 und dem Förderraum 8 erstreckt sich die Dosiermembran 4, die in beiden Räumen wirksam ist. Zusätzlich ist in dem Förderraum 8 die Fördermembran 22 wirksam, die ein größeres Fördervolumen als die Dosiermembran 4 erzeugt. Ein Druckanschluß 9 des Förderraums 8 führt zu einem Vorlagebehälter 10 (Figur 1), der seinerseits ablaufseitig mit einem Zulauf 11 des Dosierraums 7 verbunden ist. Der Vorlagebehälter 10 ist oberhalb des Dosierraums 7 angeordnet, so daß die Flüssigkeit, die aus dem Vorratsbehälter über den Förderraum 8 in den Vorlagebehälter 10 gefördert wird, dem Dosierraum 7 allein durch Schwerkraft zulaufen kann und dann über den druckseitigen Ablauf 6 dosiert abgegeben wird.

Der Vorlagebehälter 10 besteht aus zwei an ihrem oberen und unteren Enden jeweils hydraulisch nach dem Prinzip kommunizierender Röhren verbundenen Teilbereichen 12 und 13, die an ihrem gemeinsamen Auslaß ein über einen Magnetschalter 20 automatisiert ansteuerbares Absperrventil 14 aufweisen. Der Teilbereich 13 ist als Meßrohr ausgebildet, dem mehrere Sensoren 21 zugeordnet sind. Sowohl die Sensoren 21 als auch der Magnetschalter 20 sind mit einer nicht gezeigten Prozessoreinheit verbunden. Durch Absperren des Auslasses des Teilbereichs 12 mittels des Absperrventils 14 kann durch eine an dem Meßrohr 13 angebrachte Skala 25 und/oder durch die Füllstandsensoren 21 die jeweils aktuelle Füllstandshöhe bestimmt und somit der Abfluß über die Zeit ermittelt werden.

Der Vorlagebehälter 10 weist darüber hinaus einen Überlauf 15 auf, über den überschüssige Flüssigkeit und auch Gasvolumina abgeführt werden, die durch Entgasungsvorgänge aufgrund des Unterdrucks beim Fördern der Flüssigkeit aus dem Vorratsbehälter entstehen.

Figur 2 zeigt den Querschnitt durch den Pumpenkopf 2, wobei linksseitig der eingespannten Dosiermembran 4 der Dosierraum 7 ausgebildet ist, dem über den Zulauf 11 die zu dosierende Flüssigkeit aus dem Vorlagebehälter 10 zugeführt werden kann. Am gegenüberliegenden Ende des Dosierraums 7 ist der druckseitige Ablauf 6 ausgebildet, über den die Flüssigkeit aus dem Dosierraum 7 abgegeben wird.

Auf der dem Dosierraum 7 abgewandten Seite der Dosiermembran 4 befindet sich der Förderraum 8, der in Form eines Ringspaltes 27 ausgebildet ist, der zwischen einer Innenwandung des Gehäuses und einem den Hubstößel 3 umgebenden Einsatzkörper 17 gebildet ist. Auf der der Dosiermembran 4 abgewandten Seite ist der Förderraum 8 von der Fördermembran 22 begrenzt, die ebenfalls an dem Hubstößel 3 befestigt und von diesem betätigt ist. Dem Förderraum 8 wird über den Sauganschluß 5 und einen Verbindungskanal 19 die zu fördernde Flüssigkeit aus dem nicht dargestellten Vorratsbehälter zugeführt, während der Druckanschluß 9 des Förderraums 8 von einem ersten Kanal 18, der nahe der Fördermembran 22 in den Förderraum 8 mündet, und einen zweiten Kanal 16 gebildet ist, der nahe der Dosiermembran 4 in den Förderraum 8 mündet. Der erste und zweite Kanal sind in dem Druckanschluß 9 zusammengeführt.

In allen saug- sowie druckseitigen Anschlüssen sowohl des Dosierraums 7 als auch des Förderraums 8 sind in Förderrichtung öffnende Rückschlagventile 26 bekannten Aufbaus vorgesehen.

Wenn der Hubstößel 3 gemäß Figur 2 nach rechts bewegt wird, werden damit auch die Dosiermembran 4 und die Fördermembran 22 nach rechts bewegt. Das bei der Bewegung der Fördermembran 22 verdrängte Volumen ist größer als das bei der entsprechenden Bewegung der Dosiermembran 4 verdrängte Volumen, da der Innendurchmesser des den Förderraum 8 bildenden Ringspalts 27 auf der Seite der Fördermembran 22 vergrößert ist. Die Volumendifferenz führt zu einer Vergrößerung des Volumens des Förderraums 8, so daß über den Sauganschluß 5 Flüssigkeit aus dem Vorratsbehälter in den Förderraum angesaugt wird. Bei entgegengesetzter, gemäß Figur 2 nach links gerichteter Bewegung des Hubstößels 3 mit den Membranen 4 und 22 wird das Volumen des Förderraums 8 verringert, wodurch die Flüssigkeit aus dem Förderraum über den Druckanschluß 9 in den Vorlagebehälter 10 gefördert wird.

Während der nach rechts gerichteten Bewegung des Hubstößels 3, d.h. während des Saugtaktes, wird Flüssigkeit aus dem Vorlagebehälter 10 über den Zulauf 11 in den Dosierraum 7 angesaugt und bei entgegengesetzter Bewegung des Hubstößels 3 aus dem Dosierraum 7 über den druckseitigen Ablauf 6 dosiert abgegeben.

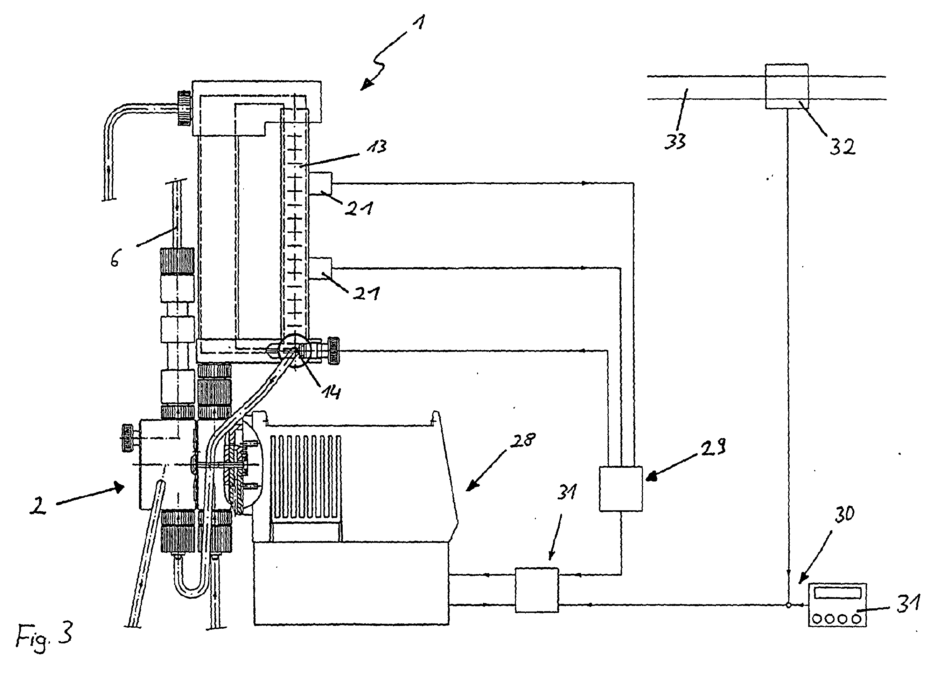

Fig. 3 zeigt die Membrandosierpumpe 1 und die mit ihr zusammenwirkende Steuereinrichtung, die aus einer mit den an dem Meßrohr 13 angeordneten Sensoren 21 zusammenwirkenden Einheit zur Verarbeitung des Istwertes 29, einer Einheit zur Vorgabe eines Sollwerts 30 und einem Regler 31 zum Abgleich von Istwert und Sollwert besteht. Der Regler 31 steuert den in dem Gehäuse 28 angeordneten Hubantrieb. In einem der Elemente der Steuerung oder alternativ in einer CPU erfolgt die Umrechnung des über die Füllstandsmessung mittels der Sensoren 21 bestimmten Dosiervolumens und wird in dem Regler 31 in Beziehung zu den das Dosiervolumen charakterisierenden Werten des Antriebs gesetzt, die dem Regler als Rückmeldesignal von dem Antrieb zugehen.

Die Einheit 30 zur Vorgabe des Sollwertes kann entweder eine Programmiereinrichtung 31 sein, über die beispielsweise manuell ein bestimmter Wert eingegeben werden kann oder auch ein Sensor 32, der beispielsweise den Volumenstrom in einer Rohrleitung 33 aufnimmt und anhand dieses Wertes einen Sollwert für den über die Pumpe 1 in die Rohrleitung zu dosierenden Volumenstrom vorgibt. Die Dosierung erfolgt über eine nicht gezeigte Verbindung zwischen dem druckseitigen Anschluß 6 des Pumpenkopfs 2 und der Rohrleitung 33.

Eine automatisierte Ansteuerung des Absperrventils 14 erfolgt über die Einheit 29 der Steuereinrichtung.

Bei Verwendung eines Schrittmotors als Hubantrieb ist eine sehr exakte Steuerung des Antriebs über den Regler 31 möglich, mit der durch den digitalisierten Pulse-Pause-Betrieb und das Rückmeldesignal des Antriebsmotors an den Regler 31 eine chargenweise Dosierung mit kleinsten Einheiten möglich ist.

## Patentansprüche

1. Membrandosierpumpe mit einem Dosierraum (7), der einen Zulauf (11) und einen druckseitigen Ablauf (6) sowie eine von einem Hubantrieb betätigte Dosiermembran (4) aufweist, und mit einem stromauf des Dosierraums (7) angeordneten Förderraum (8), der einen Sauganschluss (5) für das zu dosierende Medium und einen Druckanschluss (9) sowie eine von einem Hubantrieb betätigte Fördermembran (22) aufweist, **dadurch gekennzeichnet, dass** der Förderraum (8) über seinen Druckanschluss (9) an einen Vorlagebehälter (10) angeschlossen ist, der ablaufseitig mit dem Zulauf (11) des Dosierraums (7) verbunden ist und einen gegen die Atmosphäre offenen Überlauf (15) aufweist.

2. Membrandosierpumpe nach Anspruch 1, **dadurch gekennzeichnet, daß** der Vorlagebehälter (10) oberhalb des Dosierraums (7) angeordnet ist.

3. Membrandosierpumpe nach Anspruch 1 oder 2, **dadurch gekennzeichnet, daß** der Vorlagebehälter (10) aus zwei kommunizierenden Teilbereichen (12, 13) gebildet ist, die an beiden Enden hydraulisch verbunden und über eine gemeinsame Ablaufleitung (24) an den Zulauf (11) des Dosierraums (7) angeschlossen sind und von denen einer (13) als Meßrohr zur Durchflußmessung ausgebildet ist, und daß in der gemeinsamen Ablaufleitung (24) ein Absperrventil (14) angeordnet ist, das in der Schließstellung nur den Weg vom Meßrohr zum Zulauf (11) des Dosierraums (7) freigibt.

4. Membrandosierpumpe nach einem der Ansprüche 1 bis 3, **dadurch gekennzeichnet, daß** das Meßrohr eine Skalierung (25) zum Auslitern aufweist.

5. Membrandosierpumpe nach einem der Ansprüche 1 bis 4, **dadurch gekennzeichnet, daß** das Absperrventil (14) für einen Meßvorgang automatisiert ansteuerbar ist.

6. Membrandosierpumpe nach einem der Ansprüche 1 bis 5, **dadurch gekennzeichnet, daß** die Dosiermembran (4) und die Fördermembran (22) an einem gemeinsamen, sie antreibenden Hubstößel (3) angeordnet sind.

7. Membrandosierpumpe nach einem der Ansprüche 1 bis 6, **dadurch gekennzeichnet, daß** die Dosiermembran (4) an ihrer dem Dosierraum (7) abgewandten Rückseite zusätzlich zu der Fördermembran (22) als Pumporgan im Förderraum (8) wirksam ist.

8. Membrandosierpumpe nach einem der Ansprüche 1 bis 7, **dadurch gekennzeichnet, daß** der Förderraum (8) durch einen konzentrisch zum Hubstößel (3) in dessen Gehäuse angeordneten Ringspalt (27) gebildet ist, der an einer Seite durch die Rückseite der Dosiermembran (4) und an der entgegengesetzten Seite durch die Fördermembran (22) begrenzt ist.

9. Membrandosierpumpe nach Anspruch 8, **dadurch gekennzeichnet, daß** der Ringspalt (27) dosiermembranseitig einen kleineren Durchmesser als fördermembranseitig aufweist.

10. Membrandosierpumpe nach einem der Ansprüche 1 bis 9, **dadurch gekennzeichnet, daß** der Sauganschluß (5) und der Druckanschluß (9) des Förderraums (8) an der der Fördermembran (22) zugewandten Seite des Ringspalts (27) münden.

11. Membrandosierpumpe nach einem der Ansprüche 1 bis 10, **dadurch gekennzeichnet, daß** in dem Förderraum (8) ein zusätzlicher druckseitiger Anschluß (16) an dem an die Dosiermembran (4) angrenzenden Bereich des Ringspalts (27) angeordnet ist.

12. Membrandosierpumpe nach Anspruch 11, **dadurch gekennzeichnet, daß** der zusätzliche druckseitige Anschluß (16) des Förderraums (8) in dem mit einem Rückschlagventil (26) gesicherten Druckanschluß (9) zu dem Vorlagebehälter (10) mündet.

13. Membrandosierpumpe nach einem der Ansprüche 1 bis 12, **dadurch gekennzeichnet, daß** das pro Membranhub im Förderraum (8) verdrängte Fördervolumen größer als das gleichzeitig im Dosierraum (7) verdrängte Dosiervolumen ist.

14. Membrandosierpumpe nach einem der Ansprüche 1 bis 13, **dadurch gekennzeichnet, daß** an dem Meßrohr (13) zumindest ein Sensor (21) zur Bestimmung der Füllstandshöhe angeordnet ist.

15. Membrandosierpumpe nach einem der Ansprüche 1 bis 14, **gekennzeichnet durch** eine zumindest mit dem Sensor (21) verbundene Steuereinrichtung zum automatisierten Ansteuern des Hubantriebs.

16. Membrandosierpumpe nach Anspruch 15, **dadurch gekennzeichnet, daß** die Steuereinrichtung eine Einheit (30) zur Vorgabe eines das Fördervolumen pro Zeiteinheit festlegenden Sollwertes, eine Einheit (29) zur Bestimmung des Ist-Wertes und einen Regler (31) zum Abgleich von Soll- und Ist-Wert aufweist.

17. Membrandosierpumpe nach Anspruch 16, **dadurch gekennzeichnet, daß** die Einheit (29) zur Bestimmung des Ist- Wertes mit dem zumindest einen Sensor (21) verbunden ist.

18. Membrandosierpumpe nach einem der Ansprüche 14 bis 17, **dadurch gekennzeichnet, daß** der Sensor ein Drucksensor ist.

19. Membrandosierpumpe nach einem der Ansprüche 14 bis 17, **dadurch gekennzeichnet, daß** an dem Meßrohr zwei Sensoren auf unterschiedlichem Niveau angeordnet sind.

20. Membrandosierpumpe nach einem der Ansprüche 1 bis 19, **dadurch gekennzeichnet, daß** der Hubantrieb ein Schrittmotor ist.

21. Membrandosierpumpe nach einem der Ansprüche 1 bis 19, **dadurch gekennzeichnet, daß** der Hubantrieb die Fördermembran (22) mit konstantem Hubweg oder mit konstanter Hubfrequenz betätigt.

## Claims

1. Diaphragm metering pump with a metering chamber (7), which has an inlet (11) and a pressure side outlet (6), as well as a metering diaphragm (4) actuated by a lifting drive, and with a feed chamber (8) positioned upstream of the metering chamber (7) and which has a suction connection (5) for the medium to be metered and a pressure connection (9), as well as a feed diaphragm (22) actuated by a lifting drive, **characterized in that** the feed chamber (8) is connected via its pressure connection (9) to a receiver container (10), which is connected on the outlet side with the inlet (11) of the dosing chamber (7) and has an overflow (15) open with respect to the atmosphere.

2. Diaphragm metering pump according to claim 1, **characterized in that** the receiver container (10) is positioned above the metering chamber (7).

3. Diaphragm metering pump according to claim 1 or 2, **characterized in that** the receiver container (10) is formed from two communicating partial areas (12, 13) hydraulically connected at both ends and connected via a common discharge line (24) to the inlet (11) of metering chamber (7) and whereof one (13) is constructed as a flow measuring tube, and that in the common discharge line (24) is provided a check valve (14), which in the closed position only frees the path from the measuring tube to the inlet (11) of the metering chamber (7).

4. Diaphragm metering pump according to one of the claims 1 to 3, **characterized in that** the measuring tube has a scale (24) for measuring the content in litres.

5. Diaphragm metering pump according to one of the claims 1 to 4, **characterized in that** the check valve (14) can be automatically controlled for a measuring process.

6. Diaphragm metering pump according to one of the claims 1 to 5, **characterized in that** the metering diaphragm (4) and feed diaphragm (22) are placed on a common lifting rod (3) driving the same.

7. Diaphragm metering pump according to one of the claims 1 to 6, **characterized in that** the metering diaphragm (4) on its rear side, additionally to the feed diaphragm (22), acts as a pumping member in the feed chamber (8).

8. Diaphragm metering pump according to one of the claims 1 to 7, **characterized in that** the feed chamber (8) is formed by an annular clearance (27) arranged concentrically to the lifting rod (3) in the casing thereof and which is bounded on one side by the rear side of the metering diaphragm (4) and on the opposite side by the feed diaphragm (22).

9. Diaphragm metering pump according to claim 8, **characterized in that** on the metering diaphragm side the annular clearance (27) has a smaller diameter than on the feed diaphragm side.

10. Diaphragm metering pump according to one of the claims 1 to 9, **characterized in that** the suction connection (5) and pressure connection (9) of the feed chamber (8) issue on the side of the annular clearance (27) facing the feed diaphragm (22).

11. Diaphragm metering pump according to one of the claims 1 to 10, **characterized in that** in the feed chamber (8) is provided an additional pressure side connection (16) on the area of annular clearance (27) adjacent to the metering diaphragm (4).

12. Diaphragm metering pump according to claim 11, **characterized in that** the additional pressure side connection (16) of the feed chamber (8) issues into the pressure connection (9) to the receiver container (10) secured by a non-return valve (26).

13. Diaphragm metering pump according to one of the claims 1 to 12, **characterized in that** the feed volume displaced per diaphragm stroke in the feed chamber (8) is greater than the metering volume simultaneously displaced in metering chamber (7).

14. Diaphragm metering pump according to one of the claims 1 to 13, **characterized in that** at least one sensor (21) for determining the fill level is provided on the measuring tube (13).

15. Diaphragm metering pump according to one of the claims 1 to 14, **characterized by** at least one control device, connected to the sensor (21), for the automatic control of the lifting drive.

16. Diaphragm metering pump according to claim 15, **characterized in that** the control device has a unit (30) for giving a desired value fixing the feed volume per time unit, a unit (29) for determining the actual value and a regulator (31) for equalizing the desired and actual values.

17. Diaphragm metering pump according to claim 16, **characterized in that** the unit (29) for determining the actual value is connected to at least one sensor (21).

18. Diaphragm metering pump according to one of the claims 14 to 17, **characterized in that** the sensor is a pressure sensor.

19. Diaphragm metering pump according to one of the claims 14 to 17, **characterized in that** two sensors are placed at different levels on the measuring tube.

20. Diaphragm metering pump according to one of the claims 1 to 19, **characterized in that** the lifting drive is a stepping motor.

21. Diaphragm metering pump according to one of the claims 1 to 19, **characterized in that** the lifting drive actuates the feed diaphragm (22) with a constant height of lift or with a constant lift frequency.

## Revendications

1. Pompe doseuse à membrane comportant une chambre de dosage (7) présentant une entrée (11) et une sortie (6) du côté refoulement ainsi qu'une membrane de dosage (4) actionnée par une commande en mouvement, et une chambre de débit (8) disposée en aval de la chambre de dosage (7) présentant un raccord d'aspiration (5) pour le fluide à doser et un raccord de refoulement (9) ainsi qu'une membrane de débit (22) actionnée par une commande en mouvement, **caractérisée en ce que** la chambre de débit (8) est reliée par son raccord de refoulement (9) à un accumulateur, relié du côté de sa sortie à l'entrée (11) de la chambre de dosage (7) et présente un trop-plein (15) ouvert à l'atmosphère.

2. Pompe doseuse à membrane selon la revendication 1, **caractérisée en ce que** l'accumulateur (10) est disposé au-dessus de la chambre de dosage.

3. Pompe doseuse à membrane selon la revendication 1 ou 2, **caractérisée en ce que** l'accumulateur (10) est constitué de deux zones partielles (12, 13) communicantes, reliées de manière hydraulique aux deux extrémités et raccordées à l'arrivée (11) de la chambre de dosage (7) par un conduit de sortie (24) commun, et dont l'une (13) est conformée en conduit de mesure pour mesurer le débit, et **en ce qu'**un clapet d'isolement (14) est disposé dans le conduit de sortie (24) commun, qui, en position fermé, n'ouvre que le passage du conduit de mesure vers l'entrée (11) de la chambre de dosage (7).

4. Pompe doseuse à membrane selon l'une quelconque des revendications 1 à 3, **caractérisée en ce que** le conduit de mesure présente une graduation (25) pour vérifier la capacité en litres.

5. Pompe doseuse à membrane selon l'une quelconque des revendications 1 à 4, **caractérisée en ce que** la soupape d'arrêt (14) peut être commandée de façon automatisée pour une opération de mesure.

6. Pompe doseuse à membrane selon l'une quelconque des revendications 1 à 5, **caractérisée en ce que** la membrane de dosage (4) et la membrane de débit (22) sont disposées sur un piston (3) commun qui les entraîne.

7. Pompe doseuse à membrane selon l'une quelconque des revendications 1 à 6, **caractérisée en ce que** la membrane doseuse (4) agit également comme organe de pompage, en plus de la membrane de débit (22), dans la chambre de débit (8) sur sa face arrière opposée à la chambre de dosage (7).

8. Pompe doseuse à membrane selon l'une quelconque des revendications 1 à 7, **caractérisée en ce que** la chambre de débit (8) est constituée par un espace annulaire (27) concentrique au piston (3), disposé dans le carter de celui-ci, délimité d'un côté par la face arrière de la membrane de dosage (4) et du côté opposé par la membrane de débit (22).

9. Pompe doseuse à membrane selon la revendication 8, **caractérisée en ce que** l'espace annulaire (27) présente du côté de la membrane de dosage un diamètre inférieur à celui du côté de la membrane de débit.

10. Pompe doseuse à membrane selon l'une quelconque des revendications 1 à 9, **caractérisée en ce que** le raccord d'aspiration (5) et le raccord de refoulement (9) de la chambre de débit (8) débouchent dans la paroi de l'espace annulaire (27) en regard de la membrane de débit (22).

11. Pompe doseuse à membrane selon l'une quelconque des revendications 1 à 10, **caractérisée en ce que** dans la chambre de débit (8) est disposé un raccord (16) supplémentaire du côté refoulement dans la zone de l'espace annulaire (27) contigu à la membrane de dosage (4).

12. Pompe doseuse à membrane selon la revendication 11, **caractérisée en ce que** le raccord (16) supplémentaire du côté refoulement de la chambre de débit (8) débouche dans le raccord de refoulement (9) sécurisé par un clapet anti-retour (26) vers l'accumulateur (10).

13. Pompe doseuse à membrane selon l'une quelconque des revendications 1 à 12, **caractérisée en ce que** le volume de débit par mouvement de la membrane refoulé dans la chambre de débit (8) est supérieur au volume de dosage refoulé simultanément dans la chambre de dosage (7).

14. Pompe doseuse à membrane selon l'une quelconque des revendications 1 à 13, **caractérisée en ce qu'**au moins un détecteur (21) est disposé sur le conduit de mesure (13) pour déterminer la hauteur de remplissage.

15. Pompe doseuse à membrane selon l'une quelconque des revendications 1 à 14, **caractérisée en** par un dispositif de commande relié au moins au détecteur (21) pour commander de manière automatisée la commande en mouvement.

16. Pompe doseuse à membrane selon la revendication 15, **caractérisée en ce que** le dispositif de commande présente une unité (30) délivrant une valeur théorique de consigne du volume par unité de temps, une unité (29) de détermination de la valeur effective et un régulateur (31) pour ajuster la valeur effective à la valeur de consigne.

17. Pompe doseuse à membrane selon la revendication 16, **caractérisée en ce que** l'unité (29) de détermination de la valeur effective est reliée à l'au moins un détecteur (21).

18. Pompe doseuse à membrane selon l'une quelconque des revendications 14 à 17, **caractérisée en ce que** le détecteur est un détecteur de pression.

19. Pompe doseuse à membrane selon l'une quelconque des revendications 14 à 17, **caractérisée en ce que** deux détecteurs sont disposés sur le conduit de mesure à des niveaux différents.

20. Pompe doseuse à membrane selon l'une quelconque des revendications 1 à 19, **caractérisée en ce que** la commande en mouvement est un moteur pas à pas.

21. Pompe doseuse à membrane selon l'une quelconque des revendications 1 à 19, **caractérisée en ce que** la commande en mouvement actionne la membrane de débit (22) à course constante ou à fréquence constante.
